# EUROPEAN PATENT APPLICATION

(11) **EP 4 797 634 A1**
(43) Date of publication of application: **26.08.2026**
(21) Application number: 26158800.8
(22) Date of filing: 16.02.2026
(51) Int. Cl.: H04L 27/14, H04L 27/148

(54) **HIGH-BITRATE FSKD DITHERING COMPENSATION CIRCUIT**

(30) Priority: 24.02.2025 US 202519061287
(71) Applicant: STMicroelectronics International N.V., 1228 Plan-les-Ouates, Geneva (CH)
(72) Inventor: PORCARO, Carlo, I-89135 Reggio Calabria (IT); MILSIMER, Jan, 32300 Pilsen (CZ); CIRILLO, Giovanni Amedeo, I-10128 Torino (IT)
(74) Representative: Buzzi, Notaro & Antonielli d'Oulx S.p.A.

(57) **Abstract**

According to an embodiment, a wireless power receiving device (120) includes a demodulator (212) that generates carrier cycle data (SYS_CNT) from a received frequency-shift keying modulated signal (FSK_{IN}) with dithering. A highpass filtering circuit (404) extracts offset values from the carrier cycle data. A polyphase filtering circuit (406) includes multiple smoothing filters (704) and distributes the extracted offset values among these filters based on a dithering pattern length. A compensation circuit (408) stores smoothed offset values from the polyphase filtering circuit (406) in a dithering table (802) during an evaluation window and applies these stored values to compensate carrier cycle data during subsequent demodulation.

## Description

### TECHNICAL FIELD

The present disclosure generally relates to electronic systems and, in particular embodiments, to dithering compensation techniques for high-bitrate frequency-shift keying demodulation (FSKD).

### BACKGROUND

Wireless power transfer systems provide convenient and cordless charging solutions for various electronic devices. These systems typically consist of a wireless power transmitter and a wireless power receiver, where the transmitter generates an electromagnetic field captured by the receiver and converted into electrical power to charge the device's battery or directly power the device.

In many wireless power transfer systems, communication between the transmitter and receiver is established to facilitate efficient power transfer and ensure safety. One common communication method in these systems is frequency-shift keying (FSK) modulation. FSK modulation is a technique where digital information is transmitted by shifting the frequency of a carrier signal between two or more discrete values, each representing a specific data symbol.

When the wireless power transmitter engages with a compatible receiver, it can use FSK modulation to transmit data by modulating the operating frequency of the power signal. The receiver, in turn, demodulates the received signal using an FSK demodulator to extract the transmitted information. The FSK modulation and demodulation create a communication channel that enables the transmission of parameters from the power transmitter to the power receiver, such as device identification, and other control data, to operate the wireless power transfer system.

To minimize electromagnetic interference (EMI) with nearby electronic devices, wireless power transfer systems can incorporate techniques to reduce the peak emissions of the power signal. One such technique is dithering, which involves intentionally varying the frequency or phase of the power signal in a controlled manner. By spreading the signal's energy across a wider frequency range, dithering reduces the peak emissions at any single frequency, thereby improving EMC performance.

However, introducing dithering in the power signal can pose challenges for the FSK demodulation process at the receiver. The variations in the signal caused by dithering can affect the accuracy and reliability of the demodulated data, particularly at high bitrates. As the demand for faster communication and higher power transfer efficiency grows, there is an increasing need for effective dithering compensation techniques to maintain the integrity of the demodulated data while benefiting from the EMI reduction provided by dithering.

### SUMMARY

Technical advantages are generally achieved by embodiments of this disclosure, which describe dithering compensation techniques for high bitrate frequency-shift keying demodulation.

A first aspect relates to a wireless power receiving device configured to receive a frequency-shift keying modulated signal with dithering, the wireless power receiving device comprising a demodulator configured to generate carrier cycle data from the received modulated signal; a high-pass filtering circuit configured to extract offset values from the carrier cycle data; a polyphase filtering circuit comprising a plurality of smoothing filters, the polyphase filtering circuit configured to receive the extracted offset values, and distribute the extracted offset values among the plurality of smoothing filters based on a dithering pattern length; a compensation circuit configured to store smoothed offset values from the polyphase filtering circuit in a dithering table during an evaluation window, and apply the stored offset values to compensate carrier cycle data during a next demodulation.

A second aspect relates to a dithering compensation circuit for a wireless power receiver, comprising a high-pass filter configured to extract carrier cycle offsets; a polyphase filter comprising a plurality of smoothing filters, and a distribution circuit configured to route extracted carrier cycle offsets to respective smoothing filters based on positions within a dithering pattern length; a control circuit configured to track completion of an evaluation window comprising multiple dithering pattern lengths; and a compensation circuit configured to store smoothed offset values from the smoothing filters in a dithering table after completion of the evaluation window, and apply the stored offset values to compensate carrier cycle data during a next demodulation.

A third aspect relates to a method of compensating dithering in frequency-shift keying demodulation, the method comprising performing high-pass filtering on carrier cycle data to extract offset values; distributing the extracted offset values among a plurality of smoothing filters based on a dithering pattern length; smoothing the distributed offset values using the plurality of smoothing filters over an evaluation window; storing the smoothed offset values in a dithering table; and compensating a next carrier cycle data using the stored offset values during demodulation.

Embodiments can be implemented in hardware, software, or any combination thereof.

### BRIEF DESCRIPTION OF THE DRAWINGS

For a more complete understanding of the present disclosure and the advantages thereof, reference is now made to the following descriptions taken in conjunction with the accompanying drawings, in which:
Figure 1 is a block diagram of an embodiment wireless power system;
Figure 2 is a block diagram of an embodiment receiving device;
Figure 3 is a block diagram of an embodiment circuit, which can be implemented within the demodulator of Figure 2;
Figure 4 is a block diagram of an embodiment dithering compensation circuit;
Figure 5 is a block diagram of an embodiment control circuit;
Figure 6 is a block diagram of an embodiment high-pass filter circuit;
Figure 7 is a block diagram of an embodiment polyphase filter circuit;
Figure 8 is a block diagram of an embodiment compensation circuit;
Figure 9 is a flowchart of an embodiment method in a wireless power receiver;
Figure 10 is a schematic of an embodiment infinite impulse response (IIR) filter; and
Figure 11 is a schematic of a recursive moving average circuit.

### DETAILED DESCRIPTION OF ILLUSTRATIVE EMBODIMENTS

This disclosure provides many applicable inventive concepts that can be embodied in a wide variety of specific contexts. The particular embodiments are merely illustrative of specific configurations and do not limit the scope of the claimed embodiments. Features from different embodiments may be combined to form further embodiments unless noted otherwise. Various embodiments are illustrated in the accompanying drawing figures, where identical components and elements are identified by the same reference number, and repetitive descriptions are omitted for brevity.

Variations or modifications described in one of the embodiments may also apply to others. Further, various changes, substitutions, and alterations can be made herein without departing from the spirit and scope of this disclosure as defined by the appended claims.

While the inventive aspects are described primarily in the context of wireless power transfer systems employing frequency-shift keying demodulation, it should also be appreciated that these inventive aspects may also apply to other wireless communication systems that utilize FSK modulation and are affected by dithering. In particular, aspects of this disclosure may similarly apply to wireless data communication systems, such as those found in radio frequency identification (RFID) tags, near-field communication (NFC) devices, and short-range wireless communication protocols like Bluetooth Low Energy (BLE).

In embodiments, a dithering compensation technique for high-bitrate frequency-shift keying demodulation (FSKD) in wireless power transfer systems is proposed. The technique employs a combination of offset extraction, polyphase filtering, and table storage to mitigate the impact of dithering on the demodulated data.

In an embodiment, the wireless power receiver includes an FSKD counter-based demodulator that generates carrier cycle data from the received modulated signal. A high-pass filtering circuit extracts offset values from the carrier cycle data by determining the difference between each carrier cycle value and its corresponding mean value. A polyphase filtering circuit processes the extracted offset values using multiple smoothing filters. A dispatch circuit distributes the offset values among the smoothing filters based on their position within the dithering pattern length. The polyphase filtering circuit smooths the offset values over an evaluation window, which can span multiple dithering pattern lengths. Upon completion of the evaluation window, the smoothed offset values can be stored in a dithering table. During subsequent modulation, the stored offset values can be retrieved from the dithering table and applied to the incoming carrier cycle data to compensate for the effects of dithering.

The dithering compensation technique offers several advantages over existing solutions. The proposed technique can compensate for dithering by extracting and smoothing the offset values using an estimated dithering pattern length at the receiver that is an integer multiple of the transmitter's dithering pattern length. For example, if the transmitter has a dithering pattern length of 8, the receiver can use a pattern length of 16, but not 13, to ensure proper distribution of offset values to their corresponding smoothing filters. Additionally, polyphase filtering allows for efficient processing of the offset values, reducing the computational burden on the receiver.

The disclosed technique can be particularly well-suited for high-bitrate FSKD applications, where the impact of dithering on the demodulated data can be more pronounced. By compensating for the effects of dithering in real-time, the technique enables communication between the wireless power transmitter and receiver, even in the presence of high bitrate data transfer. These and additional details are further discussed below.

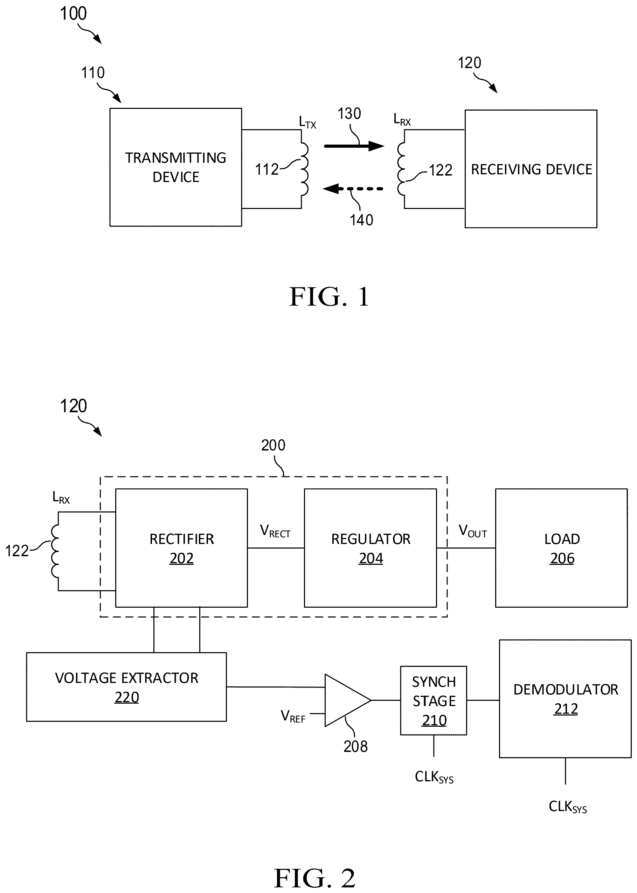

Figure 1 illustrates a block diagram of an embodiment wireless power system 100, which may also be called a wireless charging system. The system includes a transmitting device 110 and a receiving device 120, which may (or may not) be arranged as shown. The transmitting device 110 generates and transmits a power signal 130 to the receiving device 120.

The transmitting device 110 may be a base station, for example, a charging pad, which provides inductive power to the receiving device 120. The receiving device 120 may be, for example, a mobile device, a tablet, a cellular phone, a wearable communications device (e.g., a smartwatch), a digital pen, a wireless headphone, a toothbrush, a sensor, internet of things (IoT) device, or the like. The receiving device 120 is the consumer of inductive power.

The transmitting device 110 includes a transmitter coil 112 (L_{TX}). The receiving device 120 includes a receiver coil 122 (L_{RX}). Each coil, or winding, can be a loop or magnetic antenna. The coils may have a physical core (e.g., ferrite core) or an air core. The coils may be implemented as an antenna strip or using a Litz wire. The resonant frequency of each coil is based on the shape and size of the looping wire or coil. In some embodiments, additional capacitance and inductance may be added to each coil to create a resonant structure at the desired resonant operating frequency.

In embodiments, the power signal 130 is transmitted from the transmitting device 110 to the receiving device 120 using resonant inductive coupling between the transmitter coil 112 and the receiver coil 122. The receiving device 120 may use the power to charge rechargeable batteries or power the components within it directly. In embodiments, wireless power system 100 employs amplitude-shift keying (ASK) and frequency-shift keying (FSK) modulations for communication between the transmitting device 110 and the receiving device 120. The transmitting device 110 can modulate the frequency of its power signal 130 to encode data, which is then demodulated by the receiving device 120. Conversely, the receiving device 120 can communicate back to the transmitting device 110 using ASK-modulated signal 140. The ASK/FSK communication allows for exchanging information, such as power transfer protocols, device identification, and charging status.

The receiving device 120 can incorporate a glitch rejection circuit within its FSK demodulator to ensure accurate demodulation and decoding of the power signal 130, even in the presence of noise and distortions that may arise from the power transfer process. The glitch rejection technique enables reliable high-bitrate communication, which can be particularly beneficial for optimizing power transfer efficiency and supporting advanced features in compact electronic devices. Figure 2 illustrates a block diagram of an embodiment receiving device 120. The receiving device 120 includes the receiver coil 122, a voltage extractor circuit 220, a power charging circuit 200, a load 206, a comparator 208, a synchronization stage 210, and a demodulator 212, which may (or may not) be arranged as shown. The power charging circuit 200 includes a rectifier 202 and a regulator 204. The receiving device 120 may include additional components not depicted in Figure 2, such as long-term storage (e.g., non-volatile memory, etc.), a non-transitory computer-readable medium, one or more antenna elements, drivers, demodulators, modulators, filter circuits, and impedance matching circuits.

The rectifier 202 converts the alternating current (AC) voltage at the receiver coil 122 to a direct current (DC) voltage. It may be any type of rectifier, such as a low-impedance synchronous rectifier having full-wave or half-wave rectification or an active rectifier. In embodiments, the rectifier 202 may be a bridge rectifier; however, other types of rectifiers are also contemplated.

The regulator 204 receives a voltage (V_{RECT}) from the rectifier 202 and then regulates that voltage to maintain a constant output voltage (V_{OUT}) at load 206. The regulator 204 may be any type of voltage regulator, such as a linear regulator (e.g., low drop-out (LDO) linear regulator). In some embodiments, the rectifier 202 and the regulator 204 may be part of a switched-mode power supply (SMPS) circuit. As shown, load 206 is the primary benefactor of the transferred wireless energy from the transmitting device 110 to the receiving device 120. The load 206 may be a charge storage device, such as a battery. For example, load 206 may be a cellular phone battery or a smartwatch. For example, the transmitting device 110 may be a charging pad and a smartwatch may be placed on the charging pad. The charging pad transfers wireless power to the smartwatch's battery without connecting cables between the two devices.

Several interface standards have been developed to standardize wireless power transfer and related functions. One such interface standard is Qi, which the Wireless Power Consortium (WPC) promotes. Qi and similar standardized protocols may be used to define the communication interface for controlling the power transfer in the wireless power system 100. For example, the receiving device 120 may request a change (e.g., an increase, a decrease, a pause, etc.) related to the transferred wireless energy from the transmitting device 110.

The mechanism of inductive power transfer can also be utilized for communication between the transmitting device 110 and the receiving device 120. For instance, the receiving device 120 can inform the transmitting device 110 when the charging process is complete. This communication can be facilitated through a technique known as backscatter modulation, as specified in the Qi Standard for inductive wireless power transfer.

In practice, the receiving device 120 can alter its load impedance by, for example, changing the impedance of the load 206. The change in the impedance results in observable variations in the amplitude of the current or voltage in the transmitter coil 112, allowing for transmitting information from the receiving device 120 to the transmitting device 110.

In embodiments, the voltage extractor circuit 220 receives an alternating current (AC) voltage from the rectifier, which can be a signal generated during the rectification of the power signal or the voltage directly received across the terminals of the receiver coil 122. The extracted voltage is provided to the comparator 208, which maintains the same frequency variation of the incoming power signal. The voltage extractor circuit 220 can include a current sense circuit comprising a resistor and differential amplifier to perform the voltage extraction.

The comparator 208 is configured to compare the voltage associated with the receiver coil 122 and extracted by the voltage extractor circuit 220 with a reference voltage (V_{REF}). The outcome of the comparator 208 leads to the synchronization stage 210 while maintaining the same frequency variation of the incoming power signal coming from the voltage extractor circuit 220.

The synchronization stage 210 is configured to align the incoming signal from the comparator 208 with the system clock (CLK_{SYS}), ensuring proper timing for the subsequent demodulation process. Accordingly, the output of the synchronization stage 210 is the input signal of the demodulator 212. The synchronization stage 210 may include circuitry to detect and correct phase differences between the incoming signal and the system clock. This can be advantageous for accurate frequency measurement in the counter-based FSK demodulation approach.

The demodulator 212 can include a glitch rejection circuit, a conditioning circuit, a demodulating circuit, filtering stages, and the like. In embodiments, demodulator 212 is configured to filter out glitches from a binary input signal, producing a clean output signal. In embodiments, the demodulator 212 can provide multiple operational modes to enhance signal quality.

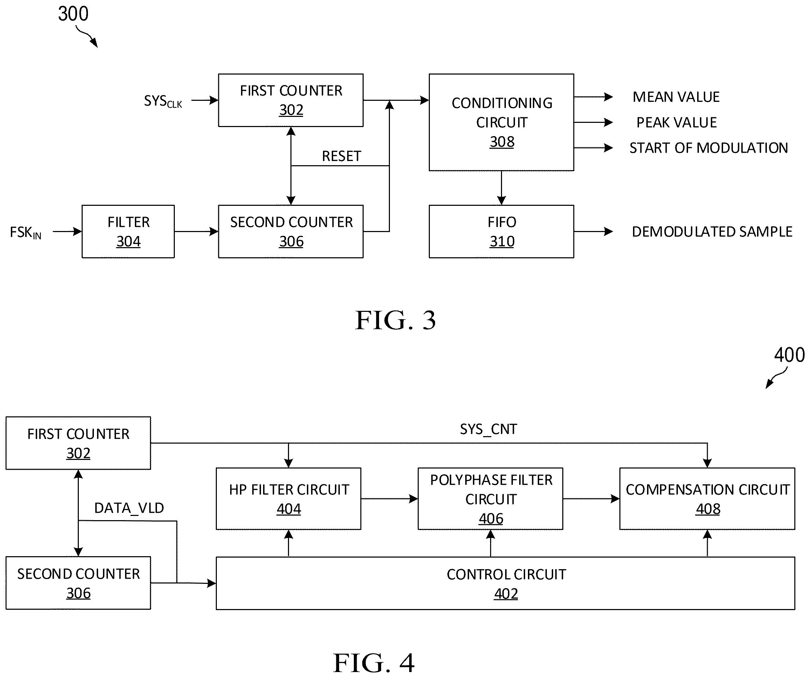

The demodulator 212 can implement a counter-based FSK demodulation technique, as further discussed with respect to Figure 3. In embodiments, it uses the synchronized signal from the synchronization stage 210 and the system clock to measure the frequency of the incoming FSK signal. The demodulator 212 can count the number of system clock cycles within each period of the FSK signal, converting the frequency variations into digital values representing the transmitted data.

Figure 3 illustrates a block diagram of an embodiment circuit 300, which can be implemented within the demodulator 212. Circuit 300 includes a first counter 302, a filter 304, a second counter 306, a conditioning circuit 308, and a first-in-first-out (FIFO) logic circuit 310. These components may or may not be arranged as shown, and circuit 300 may include additional components not depicted in the figure.

Circuit 300 is configured to measure the frequency of an unknown signal (e.g., FSK_{IN}) based on a known frequency signal (e.g., SYS_{CLK}). This approach forms the basis of counter-based FSK demodulation, where the number of system clock ticks within one or more periods of the incoming FSK signal determines the FSK signal's frequency. This count is approximately proportional to the ratio of the system clock frequency to the FSK signal frequency ( $\frac{{SYS}_{CLK}}{{FSK}_{IN}}$).

The first counter 302 receives the system clock signal (SYS_{CLK}) and increments its value at each rising edge of this known frequency signal. Concurrently, the filter 304 receives the incoming FSK signal (FSK_{IN}) and clears potential glitches, effectively acting as a bandpass filter or a low-pass filter in embodiments. The second counter 306, coupled to the filter's output, increments its value at each rising edge of the filtered FSK signal.

The operation of these counters is synchronized such that the first counter 302 increments until the second counter 306 registers a single increment. This event triggers a reset of both counters, preparing them for the next evaluation cycle. This mechanism allows the conversion of the unknown frequency signal into digital samples, with the value in the first counter 302 corresponding to the frequency of the incoming FSK signal.

Typically, the evaluation occurs over multiple carrier cycles to address the challenge of distinguishing between closely spaced FSK frequencies. This approach involves accumulating counts over several periods (N increments of the second counter 306), enhancing the system's ability to differentiate between small frequency differences, even in the presence of noise or signal distortions.

For example, consider a system with a 48 MHz system clock frequency and two FSK signal frequencies: 127.772 kHz (FSK_{IN1}) and 126.984 kHz (FSK _{IN2}). In this case, the first FSK signal (FSK_{IN1}) would result in approximately 376 ± 1 clock ticks per period, while the second FSK signal (FSK_{IN2}) would result in approximately 378 ± 1 clock ticks per period.

As demonstrated in this example, the frequencies of the incoming FSK signals can be very close, resulting in a small difference in the number of clock ticks counted. In an extreme case, both signals might result in a count of 377 ticks, making it impossible to distinguish between them in a single period. This small difference poses a challenge for reliable frequency change detection, particularly in the presence of noise or signal distortions.

The proposed dithering compensation technique offers several advantages over existing solutions. One key advantage is that there is no need to know the specific dithering pattern or pattern length used by the transmitting device 110. As long as the programmed dithering pattern length (DPL) on the receiving device 120 is an integer multiple of the one used by the transmitting device 110, the technique can effectively compensate for the dithering effects. For example, if the transmitted dithering pattern length is 8, 16, or 32, setting the dithering pattern length on the receiving device 120 to 32 covers all possible scenarios, ensuring proper compensation.

The conditioning circuit 308 processes the digital samples by, for example, averaging, extracting a baseline measurement (mean value), a peak measurement (peak value), detecting the start of modulation, and can implement dithering compensation techniques. The FIFO logic circuit 310 stores the demodulated samples for subsequent processing or analysis.

In embodiments, the proposed technique employs a combination of an IIR mean filter for extracting the actual offset values and a polyphase filter for smoothing out the offsets over multiple observation windows. The IIR mean filter removes the DC component from the carrier cycle data, isolating the actual offset values caused by the dithering process. The polyphase filter, consisting of a bank of smoothing filters, smooths out the offset values over an extended evaluation window, spanning multiple dithering pattern lengths. This multi-stage filtering approach mitigates the impact of noise and variations in the extracted offsets, providing an accurate estimation of the underlying dithering pattern.

While the FSK demodulation technique described above can extract the transmitted data from the power signal, dithering in the signal can pose challenges to the demodulation process. Dithering is commonly employed in wireless power transfer systems to reduce electromagnetic interference (EMI) and improve electromagnetic compatibility (EMC) performance.

In a typical dithering scheme, the frequency or phase of the power signal is intentionally varied in a controlled manner. This spreading of the signal's energy across a wider frequency range helps to reduce the peak emissions at any single frequency. Dithering can mitigate EMI issues and ensure compliance with regulatory standards by attenuating the power peaks at unwanted frequencies. However, dithering in the power signal can negatively impact the recognition of the transmitted data if not adequately compensated. The variations in the signal caused by dithering can lead to inaccuracies and errors in the demodulated data, particularly at high bitrates.

To address this issue, dithering compensation techniques can be employed on the receiver side to mitigate the effects of dithering and ensure reliable data recovery. These techniques aim to reconstruct the transmitted information by compensating for the variations introduced by the dithering process.

Conventionally, on the receiving device 120, the demodulator 212 employs various smoothing techniques to attenuate the dithering effects. These techniques can include, but are not limited to, moving averages (e.g., low-pass filters) over multiple carrier cycles or other signal processing methods. On the transmitting device 110, one approach to dithering compensation can be performed through an Amplitude-shift keying (ASK) demodulator using a dithering table shared between a pulse-width modulator (PWM) timer and a local oscillator, following the same period evolution. However, various other methods and techniques can be implemented to achieve dithering compensation at the transmitter side. However, these approaches may be impractical when, for example, the dithering pattern is not known in advance or when high bitrate communication is desired.

The conventional dithering compensation approach through low-pass filters can be unworkable if the bitrate is very high due to the limited number of carrier cycle samples. For example, at a carrier frequency of 360 kHz with a bitrate of 360 kbps, only one carrier cycle per bit (corresponding to the bit itself) is available, leaving no possibility to average over multiple carrier cycles.

Further, the same dithering scheme used in ASK digital demodulation on the transmitting device 110, which relies on known dithering pattern lengths, cannot be directly applied to the receiving device 120. This is because the dithering pattern and its length are parameters typically known to the ASK demodulator on the transmitting device 110 but not to the receiving device 120.

The present disclosure proposes a dithering compensation technique for high-bitrate FSKD applications to overcome these limitations. In embodiments, the proposed technique employs a combination of offset extraction, polyphase filtering, and table storage to mitigate the impact of dithering on the demodulated data without requiring prior knowledge of the specific dithering pattern used by the transmitting device 110.

Figure 4 illustrates a block diagram of an embodiment dithering compensation circuit 400, which can be interfaced with the first counter 302 and the second counter 306 of the embodiment circuit 300 implemented within the demodulator 212. Dithering compensation circuit 400 is configured to extract, smooth, and compensate for the dithering effects in the incoming carrier cycle data. It includes the first counter 302, the second counter 306, a high-pass filter circuit 404, a polyphase filter circuit 406, a compensation circuit 408, and a control circuit 402, which may (or may not) be arranged as shown. Dithering compensation circuit 400 may include additional components not shown.

The first counter 302 receives the system clock signal (SYS_{CLK}) and generates carrier cycle values. The second counter 306 is coupled to the first counter 302 and provides a data valid signal (DATA_VLD) to indicate the availability of new carrier cycle data. Different approaches can be implemented to ensure that a single sample corresponds to a single carrier. For example, the first counter 302 can be reset at each rising edge with evaluation over N performed by a subsequent accumulator circuit. As another example, during calibration, the end-of-count (EoC) of the second counter 306 can be programmed to zero.

The high-pass filter circuit 404 is configured to extract the offset values from the carrier cycle data. It can be implemented by determining the difference between each carrier cycle value (i.e., active sample) and its corresponding DC component, which can be obtained using, for example, an infinite impulse response (IIR) exponential mean filter (also called an IIR DC-track filter).

In embodiments, the IIR filter employs oversampling to ensure accurate offset extraction, even with only one sample per bit. This filter can extract the DC component from the carrier cycle values, which can be subtracted from the original values to obtain the actual offset. A programmable factor *K* can determine the IIR filter's time constant, allowing the filter's response to be adjusted based on the specific application requirements.

The polyphase filter circuit 406 is configured to process the extracted offset values. The polyphase filter smooths out the offsets over an evaluation window, spanning multiple dithering pattern lengths (e.g., 3 times the dithering pattern length). This filtering process helps mitigate the impact of noise and variations in the extracted offsets.

In embodiments, the polyphase filter circuit 406 consists of a bank of smoothing filters, each implemented as a recursive moving average. The number of moving average filters in the bank can be determined by the maximum dithering pattern length (DPL) supported by the system. For example, if the maximum dithering pattern length is 32, the polyphase filter circuit 406 includes 32 moving average filters.

The control circuit 402 manages data dispatching to the polyphase filter circuit 406. In embodiments, the control circuit 402 is configured to count the number of data valid signals (DATA_VLD). The count of data valid signals (DPL_CNT) can be employed to track each carrier cycle and dispatch the corresponding offset value to a smoothing filter within the polyphase filter circuit 406.

In embodiments, the control circuit 402 is configured to distribute the extracted offset values among the smoothing filters in a circular manner. For example, the first offset value is stored in the first smoothing filter, the second offset value in the second smoothing filter, and so on, until the count of data valid signals (DPL_CNT) reaches the end of the dithering pattern length. The process is repeated, with the next offset value stored in the first smoothing filter.

The control circuit 402 is configured to determine an evaluation window valid signal (EVAL_WINDOW_VLD) indicating when the expected number of dithering pattern length repetitions is reached, after which the compensation through the estimated offset can be applied.

In embodiments, the control circuit 402 is programmable. For example, the number of dithering pattern lengths included in each evaluation window can be programmed based on the application. For example, if the number of times the data valid signals reach the end of the dithering pattern length is set to *N*, the evaluation window will span *N* times the dithering pattern length. This allows for flexibility in balancing the trade-off between the smoothing effect and the responsiveness of the compensation process.

Once the evaluation window is reached, the compensation circuit 408 can save the last evaluated offset value in a dithering table. This stored offset value can compensate for the incoming carrier cycle data, mitigating dithering effects. In embodiments, the compensation process is performed before the start of the actual data modulation to ensure accurate data recovery.

In embodiments, the compensation circuit 408 can select between the incoming carrier cycle data and the compensated data based on the state of the evaluation window valid signal (EVAL_WINDOW_VLD). When the evaluation window is reached, the compensation circuit 408 can switch to the compensated data, applying the stored offset value from the dithering table to the incoming data stream.

Advantageously, the proposed dithering compensation circuit offers a solution to address the challenges posed by dithering in high-bitrate frequency-shift keying demodulation (FSKD) applications. By extracting offsets, smoothing them over multiple dithering windows, and applying the compensated values to the incoming data, the circuit enables reliable communication between the wireless power transmitter and receiver, even when dithering is applied over high-bitrate data transfers.

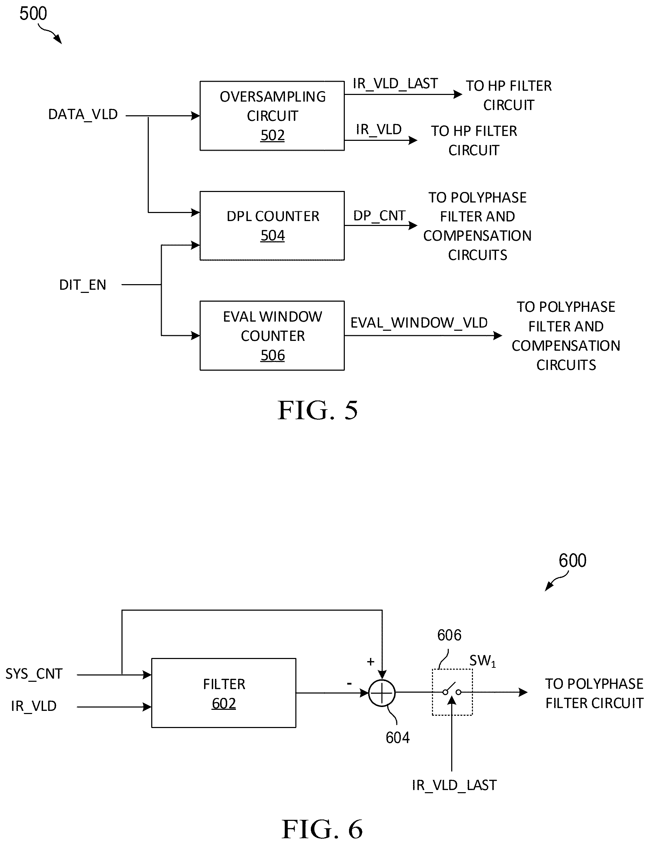

Figure 5 illustrates a block diagram of an embodiment control circuit 500, which can be implemented as the control circuit 402 in Figure 4. The control circuit 500 manages the flow of data and control signals within the dithering compensation circuit. It includes an oversampling circuit 502, a dithering pattern length (DPL) counter 504, and an evaluation window counter 506, which may (or may not) be arranged as shown. The control circuit 500 may include additional components not shown, such as memory.

The control circuit 500 is configured to orchestrate the operation of the dithering compensation circuit. It ensures that the offset values are extracted, filtered, and applied to the carrier cycle data in a synchronized and controlled manner based on the specified dithering pattern length and evaluation window duration. By providing the necessary control signals and counters, the control circuit 500 enables the seamless integration and coordination of the various components within the dithering compensation circuit.

The control circuit 500 receives the data valid signal (DATA_VLD) from the second counter 306, indicating the availability of new carrier cycle data. This signal is fed into an oversampling circuit 502, which generates an oversampled version of the data valid signal (IR_VLD) and a flag associated with the end of the oversampling procedure (IIR_VLD_LAST). The oversampled version of the data valid signal (IR_VLD) is provided to the high-pass filter circuit 404, triggering the extraction of offset values from the carrier cycle data.

In embodiments, the dithering pattern length (DPL) counter 504 is enabled by the dithering enable signal (DIT_EN) and is configured to count the incoming samples and wrap each time it reaches the end of the count. The evaluation window counter 506 keeps track of how many times the dithering pattern length (DPL) counter 504 wraps, and once the evaluation window ends, it generates the evaluation window valid signal (EVAL_WINDOW_VLD) signal to load the last offset evaluation into the dithering table of the compensation circuit 408.

The data valid signal (DATA_VLD) is also provided to the dithering pattern length (DPL) counter 504. The dithering pattern length (DPL) counter 504 is configured to increment on each data valid signal (DATA_VLD) pulse, counting each carrier cycle. The output (DP_CNT) of the dithering pattern length (DPL) counter 504 controls the distribution of the extracted offset values among the smoothing filters in the polyphase filter circuit 406. When the dithering pattern length (DPL) counter 504 reaches the end of the dithering pattern length, it resets and starts counting again from the beginning.

The evaluation window counter 506 is configured to receive the dithering enable signal (DIT_EN) as an input. The dithering enable signal (DIT_EN) determines whether the dithering compensation process is active or bypassed. When the dithering enable signal (DIT_EN) is asserted, the evaluation window counter 506 starts counting the number of times the dithering pattern length (DPL) counter 504 reaches the end of the dithering pattern length. The evaluation window valid signal (EVAL_WINDOW_VLD) from the evaluation window counter 506 indicates the completion of an evaluation window, which can span multiple dithering pattern lengths.

The evaluation window valid signal (EVAL_WINDOW_VLD) is provided to the polyphase filter circuit 406 and the compensation circuit 408. In the polyphase filter circuit 406, the evaluation window count signal (EVAL_WINDOW_VLD) controls the accumulation and averaging of the offset values within each smoothing filter. When the evaluation window is completed, the final averaged offset values are available for further processing.

In the compensation circuit 408, the evaluation window valid signal (EVAL_WINDOW_VLD) triggers the storage of the last evaluated offset value in the dithering table. Once the evaluation window is reached, the stored offset value is applied to the incoming carrier cycle data, compensating for the dithering effects. Figure 6 illustrates a block diagram of an embodiment high-pass filter circuit 600, which can be implemented as the high-pass filter circuit 404 in Figure 4. It includes a filter 602, an adder 604, and a switch 606, which may (or may not) be arranged as shown. The high-pass filter circuit 600 may include additional components not shown. The high-pass filter circuit 600 is configured to extract the actual offset values from the carrier cycle data by removing the DC component or mean value. The high-pass filter circuit 600 receives three input signals: the system clock count (SYS_CNT) from the first counter 302 and the oversampled version of the data valid signal (IR_VLD) and the flag associated with the end of oversampling (IR_VLD_LAST), both provided by the oversampling circuit 502 in the control circuit 500.

In embodiments, the filter 602 is an infinite impulse response (IIR) exponential mean filter, also known as an IIR DC-track filter. It is configured to extract the DC component or mean value from the system clock count (SYS_CNT) values. The filter 602 operates on the oversampled data, processing multiple samples for each carrier cycle, as controlled by the oversampled version of the data valid signal (IR_VLD).

In embodiments, filter 602 has a programmable time constant determined by a factor *K*, which allows for adjusting the filter's response based on the specific application requirements. The time constant controls the rate at which the filter 602 adapts to changes in the input signal to determine the high-pass filter's cutoff frequency.

The adder 604 subtracts the output of the filter 602, which represents the extracted DC component or mean value, from the original system clock count (SYS_CNT) values. This subtraction operation results in the actual offset values, effectively removing the DC component from the carrier cycle data.

The switch 606 is controlled by the flag associated with the end of oversampling (IR_VLD_LAST). When the oversampled version of the data valid signal (IR_VLD_LAST) is asserted, indicating the availability of a new offset value (allows for the settling of the output of the filter 602), switch 606 closes and allows the offset value to pass through to the output of the high-pass filter circuit 600. In embodiments, switch 606 can be implemented as a register that is enabled by the data valid signal (IR_VLD_LAST). The output of the high-pass filter circuit 600 is provided to the polyphase filter circuit 406 for further processing.

In embodiments, the settling time asserting the data valid signal (IR_VLD_LAST) to switch 606 is programmable. By employing oversampling and an IIR filter with a programmable time constant, the high-pass filter circuit 600 can ensure accurate extraction of the actual offset values, even in scenarios where only one sample per bit is available. The extracted offset values form the basis for smoothing and compensating the dithering effects in the carrier cycle data.

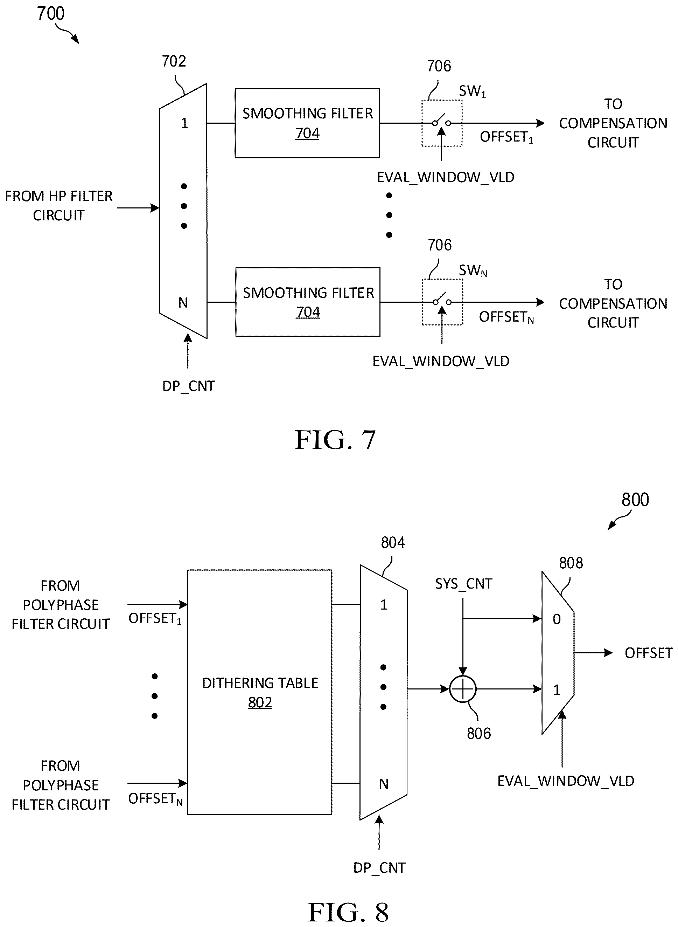

Figure 7 illustrates a block diagram of an embodiment polyphase filter circuit 700, which can be implemented as the polyphase filter circuit 406 in Figure 4. It includes a dispatching logic 702, multiple smoothing filters 704, and multiple switches, which may (or may not) be arranged as shown. The polyphase filter circuit 700 may include additional components not shown. The polyphase filter circuit 700 is configured to smooth out the extracted offset values received from the high-pass filter circuit 404 over an evaluation window.

The polyphase filter circuit 700 receives the offset values from the high-pass filter circuit 404 and the dithering pattern count signal (DP_CNT) from the control circuit 402. The number of smoothing filter circuits in the polyphase filter circuit 700 is determined by the maximum dithering pattern length (DPL) supported by the system. In the illustrated example, there are *N* smoothing filter circuits and *N* switches, where *N* corresponds to the maximum dithering pattern length.

The dispatching logic 702 is controlled by the dithering pattern count signal (DP_CNT), which acts as the selection signal. The dithering pattern count signal (DP_CNT) determines which output of the dispatching logic 702 is active, effectively distributing the offset values from the high-pass filter circuit 404 among the smoothing filters circuits. The dispatching logic 702 routes each offset value to the appropriate smoothing filter circuit based on its position within the dithering pattern. For example, the first offset value is directed to the first smoothing filter 704, the second offset value to the next smoothing filter, and so on, until the dithering pattern count (DP_CNT) reaches the end of the dithering pattern length. The process then repeats, with the next offset value directed to the first smoothing filter 704.

Each smoothing filter 704 can be implemented as a recursive moving average filter. These filters accumulate and average the offset values over a specific number of samples, determined by the evaluation window duration. The recursive nature of the filters allows for the computation of the moving average without storing a large number of samples.

Switches 706 are controlled by the evaluation window valid signal (EVAL_WINDOW_VLD) from the control circuit 402. When the evaluation window valid signal (EVAL_WINDOW_VLD) indicates the completion of an evaluation window, the switches 706 close, allowing the output of each smoothing filter circuit to be passed to the compensation circuit 408. The output of each smoothing filter 704 represents the smoothed offset value for a specific position within the dithering pattern.

In embodiments, the polyphase filter circuit 700 is configured to perform a two-dimensional filtering operation, where the offset values are filtered across the dithering pattern length (spatial filtering) and over time (temporal filtering). This approach allows for efficient smoothing of the offset values, reducing the impact of noise and variations while preserving the underlying dithering pattern.

By employing a multiplexer to distribute the offset values and multiple moving average circuits to smooth them, the polyphase filter circuit 700 ensures that the smoothed offset values accurately represent the characteristics of the dithering pattern. These smoothed offset values are then used by the compensation circuit 408 to compensate for the dithering effects in the carrier cycle data, enabling reliable communication in the presence of high-bitrate data transfer.

For example, if the dithering pattern length is 8, the first offset is stored in the first smoothing filter 704, the second offset is stored in the following smoothing filter 704, and so forth, until the eighth offset, which is stored in the last smoothing filter 704. At this point, a wrapping operation incurs and the next offset is stored in the first smoothing filter 704. At the end of the evaluation window, the offset values are stored in a dithering table following the polyphase filter circuit 700.

Figure 8 illustrates a block diagram of an embodiment compensation circuit 800, which can be implemented as the compensation circuit 408 in Figure 4. It includes a dithering table 802, a first multiplexer 804, an adder 806, and a second multiplexer 808, which may (or may not) be arranged as shown. The compensation circuit 800 may include additional components not shown. The compensation circuit 800 is configured to store the smoothed offset values received from the polyphase filter circuit 406 and apply them to the incoming carrier cycle data to compensate for the dithering effects.

The compensation circuit 800 receives the smoothed offset values from the polyphase filter circuit 406, the system clock count signal (SYS_CNT) from the first counter 302, and the dithering pattern count signal (DP_CNT) and the evaluation window valid signal (EVAL_WINDOW_VLD) from the control circuit 402.

The dithering table 802 is a memory storage element that stores the smoothed offset values received from the polyphase filter circuit 406. The size of the dithering table 802 can be determined by the maximum dithering pattern length (DPL) supported by the system. Each entry in the dithering table 802 can correspond to a specific position within the dithering pattern and holds the smoothed offset value for that position.

The dithering pattern count signal (DP_CNT) can address the dithering table 802 through the first multiplexer 804, selecting the appropriate entry based on the current position within the dithering pattern. The dithering pattern count signal (DP_CNT) and the first multiplexer 804 ensure that the stored offset values align with the incoming carrier cycle data.

The adder 806 algebraically sums the selected offset value from the dithering table 802 with the value of the incoming system clock count signal (SYS_CNT), representing the carrier cycle data. This addition operation compensates for the dithering effects by removing the estimated offset from the carrier cycle data. The second multiplexer 808 is controlled by the evaluation window valid signal (EVAL_WINDOW_VLD). When the evaluation window valid signal (EVAL_WINDOW_VLD) indicates the completion of an evaluation window, the second multiplexer 808 selects the compensated carrier cycle data from the adder 806. Otherwise, it selects the uncompensated carrier cycle data directly from the input of the system clock count signal (SYS_CNT).

The compensation circuit 800 operates in two phases: the calibration phase and the compensation phase. During the calibration phase, which occurs during the evaluation window, the smoothed offset values from the polyphase filter circuit 406 are stored in the dithering table 802. Once the evaluation window is complete, the compensation phase begins, and the stored offset values are used to compensate for the incoming carrier cycle data in real time.

By storing the smoothed offset values in the dithering table 802, algebraically adding them to the carrier cycle data using the adder 806, and selecting the appropriate output using the second multiplexer 808 based on the evaluation window count, the compensation circuit 800 effectively mitigates the impact of dithering on the demodulated data. This enables reliable communication between the wireless power transmitter and receiver, even in the presence of high-bitrate data transfer and dithering effects.

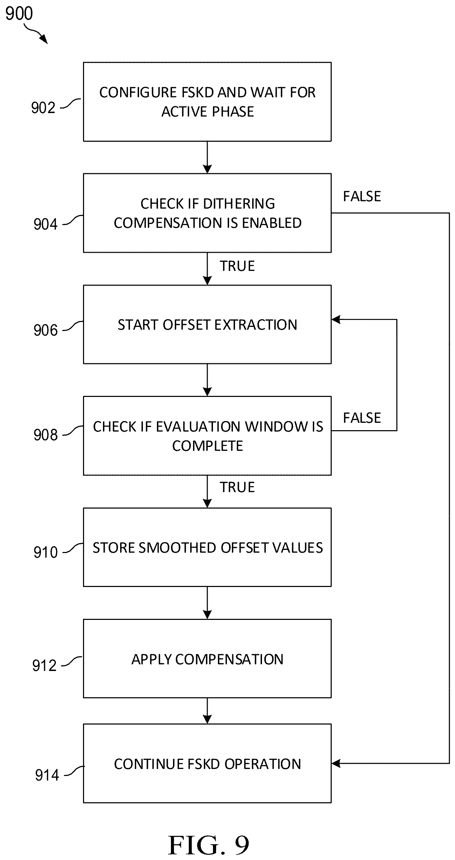

Figure 9 illustrates a flowchart of an embodiment method 900 in a wireless power receiver. Method 900 describes the steps involved in configuring the FSK demodulation and performing dithering compensation to ensure reliable communication between the wireless power transmitter and receiver. Method 900 can be implemented using the dithering compensation circuit 400, as described in Figure 4.

It is noted that all steps outlined in the method are not necessarily required and can be optional. Further, changes to the arrangement of the steps, removal of one or more steps and path connections, and addition of steps and path connections are similarly contemplated.

At step 902, the FSK demodulator is configured to work with the dithering compensation circuit. The configuration can involve setting the appropriate parameters, such as the maximum dithering pattern length (DPL), the evaluation window duration, and the IIR filter time constant. These parameters can be set based on the specific application requirements and the characteristics of the wireless power system.

The method waits for the wireless power receiver to enter an active phase, ready to receive power and communicate with the transmitter. This waiting period can ensure that the dithering compensation process is synchronized with the overall operation of the wireless power system. Once the active phase is detected, the FSK demodulator can operate on a single carrier cycle, allowing for precise frequency measurement and demodulation.

At step 904, method 900 checks whether the dithering compensation functionality is enabled. This can be controlled by a configuration register or a control signal, such as the dithering enable signal (DIT_EN).

If dithering compensation is not enabled, the method proceeds to step 914, where the FSK demodulator continues to operate without dithering compensation. In this case, the incoming carrier cycle data is processed directly without any offset extraction or compensation applied. This bypass mode allows the FSK demodulator to function in a standard manner without the additional processing overhead associated with dithering compensation.

At step 906, the offset extraction process begins in response to dithering compensation being enabled. This can involve using the high-pass filter circuit 404 to remove the DC component from the incoming carrier cycle data and obtain the actual offset values.

The offset extraction can be performed continuously, with a filter operating on the oversampled data to ensure accurate offset estimation. The filter's programmable time constant can set the filter's response and ability to track changes in the offset values over time. By operating on oversampled data, the filter can provide offset estimates even in the presence of noise or signal variations.

At step 908, a check is made as to whether the evaluation window, which can span multiple dithering pattern lengths, is complete. This can be determined by the evaluation window valid signal (EVAL_WINDOW_VLD) generated by the control circuit 402.

The evaluation window represents the time period over which the offset values are accumulated and averaged by the polyphase filter circuit 406. The length of the evaluation window can be programmable and adjusted based on the specific requirements of the application, such as the expected dithering pattern length and the desired trade-off between compensation accuracy and latency.

If the evaluation window is not complete, the method returns to step 906 and continues the offset extraction process. This loop ensures that the offset values are continuously updated and processed by the polyphase filter circuit 406 until the evaluation window is complete.

At step 910, once the evaluation window is complete, the smoothed offset values from the polyphase filter circuit 406 are stored in the dithering table 802 of the compensation circuit 408. These stored offset values represent the estimated dithering pattern and can be used for compensation in the subsequent carrier cycles.

The calibration process involves transferring the contents of the smoothing filters in the polyphase filter circuit 406 to the corresponding entries in the dithering table 802. The dithering table 802 acts as a lookup table, allowing quick access to the appropriate offset value based on the current position within the dithering pattern.

At step 912, with the smoothed offset values stored in the dithering table 802, the compensation circuit 408 applies the compensation to the incoming carrier cycle data. This can be done by algebraically adding the appropriate offset value, selected based on the current position within the dithering pattern, to the incoming data using the adder 806. The compensated data is chosen as the output of the compensation circuit using the second multiplexer 808.

At step 914, the FSK demodulator continues to operate with dithering compensation enabled, using the stored offset values in the dithering table 802 to compensate for the dithering effects in real time. This ensures accurate demodulation and data recovery, even in high-bitrate data transfers with dithering-induced variations in the incoming signal.

The method 900 loops back to step 904 and continues to monitor the dithering compensation enable signal. If the dithering compensation is disabled or the active phase is lost, the method adjusts accordingly and resumes from the appropriate step.

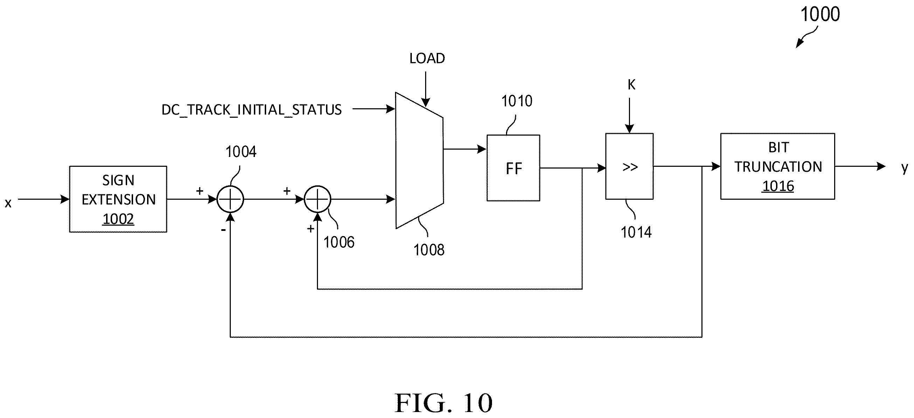

Figure 10 illustrates a schematic of an embodiment infinite impulse response (IIR) filter 1000, which can be implemented as a part of the high-pass filter circuit 404 in the dithering compensation system. The IIR filter, also known as an IIR DC-track filter, is configured to perform exponential averaging of the input values to extract the DC component or mean value from the carrier cycle data.

The IIR filter 1000 consists of several arithmetic and logic elements, including a sign extension circuit 1002, a first adder 1004, a second adder 1006, a multiplexer 1008, a register 1010, a shifter 1014, and a bit truncation circuit 1016, which may (or may not) be arranged as shown. IIR filter 1000 may include additional components not shown.

The input value (x) represents the carrier cycle data from which the DC component needs to be extracted. In embodiments involving fixed-point arithmetic, this input is sign-extended value before being provided to the first adder 1004 and the second adder 1006, to avoid overflow issues.

The IIR DC-track initial status signal (IIR_DC_TRACK_INITIAL_STATUS) initializes the filter's internal state, corresponding to the value stored in register 1010. The initialization value of the register 1010 is the output of the multiplexer 1008, controlled by a load signal (LOAD). In embodiments, this load signal can be programmed by firmware or can be hardwired.

The second adder 1006 sums the output of the first adder 1004 from the delayed output value stored in register 1010. The delayed output value stored in register 1010 represents the previous output value of the IIR filter 1000, delayed by one sample. This delay is denoted by the *z*⁻¹ term in the numerator of the transfer function: $H \left(z\right) = \frac{{2}^{- K} \times {z}^{- 1}}{1 - \left(1-{2}^{- K}\right) \times {z}^{- 1}}$.

The first adder 1004 subtracts the input value (x) to the output of the shifter 1014. The shifter multiplies by a constant factor of 2^{-*K*}. The programmable factor *K* determines the time constant of the IIR filter, which is an integer greater than or equal to zero. The time constant is given by the formula: 2⁺*^{K}.* By adjusting the value of *K*, the filter's response can be tuned to effectively track and extract the DC component from the input signal.

The bit truncation circuit 1016 can perform truncation on the output of the shifter 1014 by scaling the output dimension in embodiments involving fixed-point arithmetic or can directly propagate the output of the shifter 1014.

The output of the second adder 1006 is stored in register 1010 as the updated output value. Register 1010 ensures that the delayed output value is available for the next computation iteration. The output of the register 1010 is also directly provided as the current state of the IIR filter 1000.

The output of the IIR filter 1000 (y) represents the extracted DC component or mean value of the input signal, delayed by one sample. Its output is then provided to adder 604, performing an algebraic sum, effectively removing the DC component of the input signal.

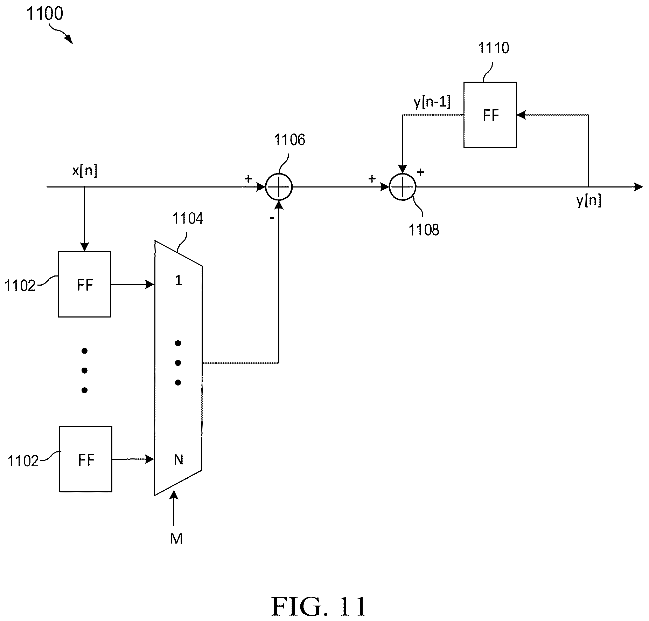

Figure 11 illustrates a schematic of a recursive moving average circuit 1100, which can be implemented as the smoothing filter 704 of Figure 7. The moving average circuit 1100 is configured to compute the moving average of a sequence of input values, such as the offset values extracted from the carrier cycle data in the dithering compensation process.

The moving average circuit 1100 includes multiple registers 1102, a multiplexer 1104, a first adder 1106, a second adder 1108, and a register 1110, which may (or may not) be arranged as shown. The moving average circuit 1100 may include additional components not shown.

The registers 1102 form a delay line that stores the previous N input values, where N is the length of the moving average window. Each register 1102 is coupled in series, with the output of one register feeding the input of the next. The input to the first register 1102 is the current input value, denoted as x[n].

The multiplexer 1104 is configured to select an older input value x[n-M], with M ranging from 1 to N, each stored in a register 1102. The selection is controlled by a control signal (M), which determines the moving average length.

In this recursive architecture, the multiplexer 1104 selects the output of an older sample x[n-M], stored in a register 1102 in the delay line, representing the oldest input value in the considered moving average window. The first adder 1106 subtracts the output of the multiplexer 1104 from the current input value x[n], removing the oldest value from the moving average computation and adding the newest value.

The second adder 1108 adds the output of the register 1110, which holds the previous moving average value, from the output of the first adder 1106. This operation updates the moving average by incorporating the newest value's contribution and removing the oldest value's contribution.

The updated moving average value is stored in the register 1110 and provided as the output of the moving average circuit 1100, denoted as y[n]. The register 1110 ensures that the previous moving average value is available for the next iteration of the computation.

The recursive structure of the moving average circuit 1100 allows for the selective processing of input values, skipping unnecessary computations on zero-valued or irrelevant samples. This feature can be particularly advantageous in the dithering compensation process, where the offset values are distributed among different smoothing filter circuits based on their position within the dithering pattern.

By implementing the moving average circuit 1100 as part of the polyphase filter circuit 406 in the dithering compensation system, the extracted offset values can be smoothed and averaged, reducing the impact of noise and variations while preserving the underlying dithering pattern.

A first aspect relates to a wireless power receiving device configured to receive a frequency-shift keying modulated signal with dithering, the wireless power receiving device comprising a demodulator configured to generate carrier cycle data from the received modulated signal; a high-pass filtering circuit configured to extract offset values from the carrier cycle data; a polyphase filtering circuit comprising a plurality of smoothing filters, the polyphase filtering circuit configured to receive the extracted offset values, and distribute the extracted offset values among the plurality of smoothing filters based on a dithering pattern length; a compensation circuit configured to store smoothed offset values from the polyphase filtering circuit in a dithering table during an evaluation window, and apply the stored offset values to compensate carrier cycle data during a next demodulation.

In a first implementation form of the wireless power receiving device, according to the first aspect as such, the compensation circuit comprises a first multiplexer configured to select an offset value from the dithering table; an adder configured to algebraically sum the selected offset value with incoming carrier cycle data; and a second multiplexer configured to select between an output of the adder and the incoming carrier cycle data based on the evaluation window.

In a second implementation form of the wireless power receiving device, according to the first aspect as such or any preceding implementation form of the first aspect, the high-pass filtering circuit has a programmable time constant.

In a third implementation form of the wireless power receiving device, according to the first aspect as such or any preceding implementation form of the first aspect, the polyphase filtering circuit is configured to smooth the extracted offset values over the evaluation window, the evaluation window comprising a plurality of dithering pattern lengths.

In a fourth implementation form of the wireless power receiving device, according to the first aspect as such or any preceding implementation form of the first aspect, the number of smoothing filters equals a maximum supported dithering pattern length.

In a fifth implementation form of the wireless power receiving device, according to the first aspect as such or any preceding implementation form of the first aspect, the polyphase filtering circuit involves a dispatching logic to distribute the extracted offset values between the smoothing filters.

In a sixth implementation form of the wireless power receiving device, according to the first aspect as such or any preceding implementation form of the first aspect, the wireless power receiving device further comprises a control circuit configured to count a number of carrier cycles; determine a current position within the dithering pattern length based on the count; and control the distribution of the extracted offset values among the plurality of smoothing filters in a circular manner based on the current position.

In a seventh implementation form of the wireless power receiving device, according to the first aspect as such or any preceding implementation form of the first aspect, the control circuit is further configured to determine a number of completed dithering pattern lengths; and generate an evaluation window signal indicating a completion of the evaluation window when the number of completed dithering pattern lengths reaches a predetermined value.

In an eighth implementation form of the wireless power receiving device, according to the first aspect as such or any preceding implementation form of the first aspect, the control circuit is programmable to set the predetermined value.

In a ninth implementation form of the wireless power receiving device, according to the first aspect as such or any preceding implementation form of the first aspect, the compensation circuit comprises a multiplexer configured to select between the compensated carrier cycle data and uncompensated carrier cycle data based on a state of the evaluation window.

A second aspect relates to a dithering compensation circuit for a wireless power receiver, comprising a high-pass filter configured to extract carrier cycle offsets; a polyphase filter comprising a plurality of smoothing filters, and a distribution circuit configured to route extracted carrier cycle offsets to respective smoothing filters based on positions within a dithering pattern length; a control circuit configured to track completion of an evaluation window comprising multiple dithering pattern lengths; and a compensation circuit configured to store smoothed offset values from the smoothing filters in a dithering table after completion of the evaluation window, and apply the stored offset values to compensate carrier cycle data during a next demodulation.

In a first implementation form of the dithering compensation circuit, according to the second aspect as such, the high-pass filtering circuit has a programmable time constant.

In a second implementation form of the dithering compensation circuit, according to the second aspect as such or any preceding implementation form of the second aspect, the control circuit comprises a first counter configured to count carrier cycles; a second counter configured to count completed dithering pattern lengths; and a comparator configured to generate an evaluation window completion signal when the second counter reaches a predetermined value.

In a third implementation form of the dithering compensation circuit, according to the second aspect as such or any preceding implementation form of the second aspect, the control circuit further comprises a programmable register configured to store the predetermined value.

In a fourth implementation form of the dithering compensation circuit, according to the second aspect as such or any preceding implementation form of the second aspect, the distribution circuit comprises a dispatching logic configured to route the extracted carrier cycle offsets to the respective smoothing filters based on a current position within the dithering pattern length.

In a fifth implementation form of the dithering compensation circuit, according to the second aspect as such or any preceding implementation form of the second aspect, the compensation circuit comprises an adder configured to perform an algebraic sum between a carrier cycle value and a selected smoothed offset value from the dithering table; and a multiplexer configured to select between the result of the algebraic sum and the corresponding carrier cycle value based on a state of the evaluation window.

In a sixth implementation form of the dithering compensation circuit, according to the second aspect as such or any preceding implementation form of the second aspect, the dithering table has a size determined by a maximum supported dithering pattern length.

A third aspect relates to a method of compensating dithering in frequency-shift keying demodulation, the method comprising performing high-pass filtering on carrier cycle data to extract offset values; distributing the extracted offset values among a plurality of smoothing filters based on a dithering pattern length; smoothing the distributed offset values using the plurality of smoothing filters over an evaluation window; storing the smoothed offset values in a dithering table; and compensating a next carrier cycle data using the stored offset values during demodulation.

In a first implementation form of the method, according to the third aspect as such, smoothing the distributed offset values comprises accumulating offset values in each smoothing filter over multiple dithering pattern lengths; tracking completion of the evaluation window using a counter; and providing the smoothed offset values to the dithering table when the counter indicates completion of the evaluation window.

In a second implementation form of the method, according to the third aspect as such or any preceding implementation form of the third aspect, distributing the extracted offset values comprises counting a number of carrier cycles; determining a current position within the dithering pattern length based on the count; and routing each extracted offset value to a respective smoothing filter based on the current position.

Although the description has been described in detail, it should be understood that various changes, substitutions, and alterations may be made without departing from the spirit and scope of this disclosure as defined by the appended claims. The same elements are designated with the same reference numbers in the various figures. Moreover, the scope of the disclosure is not intended to be limited to the particular embodiments described herein, as one of ordinary skill in the art will readily appreciate from this disclosure that processes, machines, manufacture, compositions of matter, means, methods, or steps, presently existing or later to be developed, may perform substantially the same function or achieve substantially the same result as the corresponding embodiments described herein. Accordingly, the appended claims are intended to include within their scope such processes, machines, manufacture, compositions of matter, means, methods, or steps.

The specification and drawings are, accordingly, to be regarded simply as an illustration of the disclosure as defined by the appended claims, and are contemplated to cover any and all modifications, variations, combinations, or equivalents that fall within the scope of the present disclosure.

## Claims

1. A wireless power receiving device (120) configured to receive a frequency-shift keying modulated signal with dithering, the wireless power receiving device (120) comprising:
a demodulator (212) configured to generate carrier cycle data from the received modulated signal;
a high-pass filtering circuit (404, 600) configured to extract offset values from the carrier cycle data;
a polyphase filtering circuit (406, 700) comprising a plurality of smoothing filters (704), the polyphase filtering circuit (406, 700) configured to:
receive the extracted offset values, and
distribute the extracted offset values among the plurality of smoothing filters (704) based on a dithering pattern length;
a compensation circuit (408, 800) configured to:
store smoothed offset values from the polyphase filtering circuit (406, 700) in a dithering table (802) during an evaluation window, and
apply the stored offset values to compensate carrier cycle data during a next demodulation.

2. The wireless power receiving device (120) of claim 1, wherein the compensation circuit (408, 800) comprises:
a first multiplexer (804) configured to select an offset value from the dithering table (802);
an adder (806) configured to algebraically sum the selected offset value with incoming carrier cycle data; and
a second multiplexer (808) configured to select between an output of the adder (806) and the incoming carrier cycle data based on the evaluation window.

3. The wireless power receiving device (120) of any of the previous claims, wherein the high-pass filtering circuit (404, 600) has a programmable time constant.

4. The wireless power receiving device (120) of any of the previous claims, wherein the polyphase filtering circuit (406, 700) is configured to smooth the extracted offset values over the evaluation window, the evaluation window comprising a plurality of dithering pattern lengths.

5. The wireless power receiving device (120) of any of the previous claims, wherein the number of smoothing filters (704) equals a maximum supported dithering pattern length.

6. The wireless power receiving device (120) of any of the previous claims, wherein the polyphase filtering circuit (406, 700) involves a dispatching logic (702) to distribute the extracted offset values between the smoothing filters (704).

7. The wireless power receiving device (120) of any of the previous claims, further comprising a control circuit (402, 500) configured to:
count a number of carrier cycles;
determine a current position within the dithering pattern length based on the count; and
control the distribution of the extracted offset values among the plurality of smoothing filters (704) in a circular manner based on the current position.

8. The wireless power receiving device (120) of claim 7, wherein the control circuit (402, 500) is further configured to:
determine a number of completed dithering pattern lengths; and
generate an evaluation window signal indicating a completion of the evaluation window when the number of completed dithering pattern lengths reaches a predetermined value.

9. The wireless power receiving device (120) of claim 8, wherein the control circuit (402, 500) is programmable to set the predetermined value.

10. The wireless power receiving device (120) of any of the previous claims, wherein the compensation circuit (408, 800) comprises a multiplexer (808) configured to select between the compensated carrier cycle data and uncompensated carrier cycle data based on a state of the evaluation window.

11. A method (900) of compensating dithering in frequency-shift keying demodulation, the method (900) comprising:
performing high-pass filtering on carrier cycle data to extract offset values;
distributing the extracted offset values among a plurality of smoothing filters (704) based on a dithering pattern length;
smoothing the distributed offset values using the plurality of smoothing filters (704) over an evaluation window;
storing the smoothed offset values in a dithering table (802); and
compensating a next carrier cycle data using the stored offset values during demodulation.

12. The method (900) of claim 11, wherein smoothing the distributed offset values comprises:
accumulating offset values in each smoothing filter (704) over multiple dithering pattern lengths;
tracking completion of the evaluation window using a counter; and
providing the smoothed offset values to the dithering table (802) when the counter indicates completion of the evaluation window.

13. The method (900) of claim 11 or claim 12, wherein distributing the extracted offset values comprises:
counting a number of carrier cycles;
determining a current position within the dithering pattern length based on the count; and
routing each extracted offset value to a respective smoothing filter (704) based on the current position.
